**Europäisches Patentamt**

**European Patent Office**

**Office européen des brevets**

(11) Veröffentlichungsnummer: **0 148 375**
A2

## (12) EUROPÄISCHE PATENTANMELDUNG

(21) Anmeldenummer: **84113858.9**

(22) Anmeldetag: **16.11.84**

(51) Int. Cl.⁴: **B 07 B 9/00,** B 02 C 18/40,
B 65 B 69/00

(30) Priorität: **27.12.83 DE 3347115**

(43) Veröffentlichungstag der Anmeldung: **17.07.85**
**Patentblatt 85/29**

(84) Benannte Vertragsstaaten: **AT DE GB IT NL SE**

(71) Anmelder: **HAZEMAG Dr. E. Andreas GmbH & Co.,
Rösnerstrasse 6-8 Postfach 34 47, D-4400 Münster (DE)**

(72) Erfinder: **Blömker, Kurt, Windmühlenstrasse 26,
D-4540 Lengerich (DE)**
Erfinder: **Gräler, Werner, Königsberger Strasse 10,
D-4543 Lienen (DE)**
Erfinder: **Kurney, Werner, Bünkamp 11, D-4400 Münster
(DE)**
Erfinder: **Stapel, Wilhelm, Königsberger Weg 10,
D-4415 Sendenhorst 2 (DE)**

(54) **Vorrichtung zum Aufreissen von Müll enthaltenden Säcken und zum nachfolgenden Sieben des Mülls.**

㉗ Es wird eine Vorrichtung zum Aufreißen von Müll enthaltenden Säcken und zum nachfolgenden Sieben des Mülls beschrieben, die aus einer Siebtrommel und einer vorgeschalteten Trommel besteht, die an der Innenwand Stechoder Schneidwerkzeuge aufweist und unabhängig von der Siebtrommel angetrieben wird.

EP 0 148 375 A2

Vorrichtung zum Aufreißen von Müll enthaltenden
Säcken und zum nachfolgenden Sieben des Mülls

Die Erfindung betrifft eine Vorrichtung zum Aufreißen
von Müll enthaltenden Säcken und zum nachfolgenden
Sieben des Mülls, die eine in Durchlaufrichtung geneigte Siebtrommel und ins Innere der Trommel ragende
Stech- oder Schneidwerkzeuge aufweist.

Bekannte Vorrichtungen dieser Art (DE-OSen 28 39 604
und 31 02 846, EP-OS 0 082 815) bestehen aus einer geneigten Siebtrommel, die über ihre Länge oder einen
Teilbereich ihrer Länge die erwähnten Stech- oder
Schneidwerkzeuge aufweist. Diese Vorrichtungen haben
in ihrer Wirkung nicht befriedigt, weil die Säcke teilweise nicht oder zu spät geöffnet wurden und sie daher
mit Inhalt durch die Siebtrommel gelangten, die Siebfläche nicht ausgenutzt wurde. Es hat sich dabei herausgestellt, daß das Aufreißen von mit Müll gefüllten
Säcken, wie sie mehr und mehr zur Aufnahme und zum Abtransport insbesondere von Hausmüll verwendet werden,
erhebliche Schwierigkeiten bereitet, weil der Inhalt
der Säcke, insbesondere bezüglich des Gewichts, sehr
unterschiedlich ist, so daß bei leichtem Inhalt die
Stech- oder Schneidwerkzeuge die Säcke nicht durchstechen oder zerreißen. Auch wird die Absiebung beeinträchtigt, weil an den Einbauten hängenbleibende Müll-
und Sackteile Löcher abdecken und ein Gleiten und
Rollen des Mülls über die Siebwände, was für den Siebvorgang wichtig ist, verhindert wird.

Man hat deshalb allerdings auch schon den ersten, dem
Aufgabeende der Trommel zunächst gelegenen Teil der
Siebtrommel undurchlocht ausgeführt und in diesem Teil
Zerkleinerungswerkzeuge vorgesehen (Rohstoff-Rundschau
18/1983, Seite 489).

Auch diese Vorrichtung hat nicht voll befriedigt, weil
die Säcke aus den genannten Gründen nicht ausreichend

...

zerrissen werden bzw. Störungen dadurch aufgetreten sind, daß sich Textilien um die Zerkleinerungswerkzeuge gewickelt haben. Im übrigen wird in dieser Vorrichtung Glas weitgehend zerkleinert und so einer Separierung und späteren Wiederverwendung entzogen.

Aufgabe der Erfindung ist es, diese Nachteile der bekannten Vorrichtungen zu vermeiden und eine Vorrichtung zu schaffen, die alle Arten von Müllsäcken wirksam zerreißt, den darin enthaltenen Müll für eine Trennung der einzelnen Bestandteile freilegt. Das wird erfindungsgemäß dadurch erreicht, daß die Stech- oder Schneidwerkzeuge in einer der Siebtrommel vorgeschalteten, unabhängig von dieser antreibbaren Trommel vorgesehen sind. Während nämlich eine Siebtrommel, wenn sie wirksam arbeiten soll, eine verhältnismäßig geringe Umdrehungszahl haben muß, ist es für das Aufreißen der Säcke wichtig, daß die die Stech- oder Schneidwerkzeuge aufweisende Trommel (im Nachfolgenden wird nur noch der zweite Begriff für die Werkzeuge verwendet) mit höherer Drehzahl angetrieben wird, damit die Säcke von den Schneidwerkzeugen mit möglichst großer Wucht erfaßt werden, so daß die Schneidwerkzeuge schon gleich am Anfang der Behandlung tief in die Säcke eindringen und diese aufstechen bzw. aufschlitzen. Die Säcke werden dann von den Schneidwerkzeugen in eine dem Trommeldurchmesser entsprechende Höhe, die in der Praxis nur etwa 2 m zu betragen braucht, mitgenommen, und während sie sich auf Grund ihres Gewichts von den Schneidwerkzeugen lösen, erfolgt ein weiteres Aufschneiden bzw. Aufreißen der Säcke. Diese fallen dann auf den Trommelgrund vor die sich mit nicht unerheblicher waagerechter Geschwindigkeit bewegenden Schneidwerkzeuge, von denen sie nicht nur erneut aufgespießt, sondern auch weiter aufgeschlitzt werden.

...

Es hat sich gezeigt, daß die Säcke nach wenigen derartigen Hub- und Fallbewegungen mit Sicherheit so weit aufgerissen sind, daß ihr Inhalt frei von der Umhüllung ist und dann in diesem Zustand in die nachgeschaltete Siebtrommel gelangt. Diese gute Wirkung konnte mit den bekannten Vorrichtungen nicht erzielt werden, weil die Schneidwerkzeuge an der Siebtrommel vorgesehen und bezüglich ihrer Umlaufgeschwindigkeit an diejenige der Siebtrommel gebunden sind.

Es sind allerdings Vorrichtungen zum Aufreißen von gefüllten Säcken bekannt, bei denen einer Siebtrommel oder sonstigen Siebvorrichtung eine gesondert angetriebene Zerreißvorrichtung vorgeschaltet ist (US-PSen 4 181 461, 4 182 592, FR-PS 2 483 882). Diese Zerreißvorrichtungen sind jedoch für das Aufreißen von Säcken bestimmt, die gleichmäßig körniges oder granuliertes Material, wie Getreide, Kaffee oder dgl. enthalten, das spezifisch verhältnismäßig schwer ist, so daß die Säcke den eindringenden Werkzeugen auf Grund ihrer Massenträgheit einen verhältnismäßig großen Widerstand entgegensetzen. Abgesehen davon sind diese bekannten Zerreißvorrichtungen für Müll enthaltende Säcke nicht geeignet, weil sie von den oft im Müll befindlichen Textilien, insbesondere von Damenstrümpfen, verstopft werden würden. Hierfür sind vielmehr nur einfache Schneidwerkzeuge geeignet, von denen diese Müllteile bei Erreichen der höchsten Lage in der sich drehenden Trommel abfallen können.

Der durch den unabhängigen Antrieb der einer Siebtrommel vorgeschalteten Trommel begründete Vorteil ergibt sich natürlich auch, wenn diese Trommel als Siebtrommel ausgebildet ist, die eine gewisse Vorabsiebung vornimmt. Ihre Siebwirkung wird aber durch die beschriebenen Tatsachen stark vermindert, und es ist eine Frage der Kal-

...

kulation, ob sich die Kosten für die teurere Trommel im Hinblick auf die nicht optimale Vorsiebwirkung lohnen. Im allgemeinen wird es vorteilhafter sein, wenn in weiterer Ausgestaltung der Erfindung die vorgeschaltete Trommel einen geschlossenen, also nicht gelochten, vorzugsweise runden Mantel aufweist. Dabei ergibt sich der zusätzliche Vorteil, daß Glasgegenstände an den Kanten der Sieblochung und den längsverlaufenden Ecken der im allgemeinen für besonders gute Absiebung von Müll verwendeten Siebtrommeln mit polygonalem Querschnitt nicht übermäßig zu Bruch gehen, also noch gut aussortiert werden können.

Die Wirkung der vorgeschalteten Trommel kann dem jeweils anfallenden Müll in vorteilhafter Weise dadurch angepaßt werden, wenn die vorgeschaltete Trommel in ihrer Neigung zur Waagerechten veränderbar ist. Bei schwerer aufreißbaren Säcken sollte die Neigung geringer sein als bei leichter aufreißbaren.

Während für die Absiebung von Müll eine ganz bestimmte Umfangsgeschwindigkeit vorgegeben ist, die sicherstellt, daß der Müll im unteren Teil und auf der aufsteigenden Seite etwa bis zu einer Ebene, die horizontal durch die Mittelachse der Siebtrommel geht, tüchtig herumgewirbelt wird, damit sich das feine Gut auch von flächigen größeren Müllteilen löst, ist es für das Aufreißen der Müllsäcke vorteilhaft, wenn die vorgeschaltete Trommel mit einer höheren Drehzahl bzw. Umfangsgeschwindigkeit antreibbar ist. Mit einer höheren Drehzahl schon deshalb, weil der Durchmesser der vorgeschalteten Trommel wegen des Übergangs in die Siebtrommel unter Umständen kleiner als der Durchmesser der Siebtrommel gewählt werden muß. Auch sollen die Schneidwerkzeuge mit möglichst großer Wucht in die Müllsäcke hineingestoßen werden. Darüber hinaus sollen letztere

...

auch möglichst weit mit nach oben, etwa bis kurz vor den Scheitelpunkt der Trommel genommen werden. So wird eine hohe Relativgeschwindigkeit zwischen den im unteren Trommelteil etwa waagerecht wirkenden Schneidwerkzeugen und den etwa senkrecht herabfallenden Müllsäcken erreicht.

Besonders vorteilhaft ist es, wenn die Schneidwerkzeuge eine gezahnte Schneidkante aufweisen und die Schneidkante radial ausgerichtet ist und die Zähne mit ihren Spitzen in Umlaufrichtung weisen. Damit wird erreicht, daß die Zähne weit in die Müllsäcke eindringen.

Um zu verhindern, daß sich Plastikfolien, Textilien und dgl. um die Schneidwerkzeuge wickeln, ist es weiterhin vorteilhaft, wenn die Schneidwerkzeuge ein Flächenprofil haben, dessen Länge in Umfangsrichtung der Trommel etwa der Höhe der Schneidkante in Radialrichtung entspricht. Die angesprochenen Teile, so auch Drähte usw., können, wenn sich die Schneidwerkzeuge oben befinden, von dem verhältnismäßig flach verlaufenden Rücken derselben leicht freikommen und herabfallen. In weiterer Ausgestaltung der Erfindung ist vorgesehen, daß die Höhe der Schneidwerkzeuge etwa dem Durchmesser zu verarbeitender Müllsäcke entspricht.

Während, wie Versuche ergeben haben, Flaschen und andere Glasgegenstände am Grund einer runden Trommel entlangrollen oder -gleiten, ohne übermäßig zerkleinert zu werden, zerbrechen sie, wenn sie gegen die Schneidwerkzeuge schlagen. Um diesen unerwünschten Bruch zu vermeiden, sieht die Erfindung vor, daß das der Wandung der Trommel zugewandte äußere Ende der Schneidkante mit einer Wulst aus elastischem Material gepuffert ist.

Besonders vorteilhaft ist es, wenn in Umfangsrichtung

...

0148375

der Trommel nur wenige Schneidwerkzeuge, z. B. zwei auf 360°, vorgesehen sind und in axialer Richtung der Abstand eines Schneidwerkzeugs zum anderen etwas kleiner als der Durchmesser eines gefüllten Müllsacks, der in etwa 600 mm mißt, ist und die Schneidwerkzeuge zueinander versetzt (in Schraubenlinie) angeordnet sind. Damit wird erreicht, daß jeder Müllsack unverzüglich erfaßt wird und beim Herabfallen aus der Höhe wenigstens eine kurze Zeit auf dem Trommelgrund zu liegen kommt, von der Trommelwandung auf Grund der Reibung etwas mitgenommen wird, um dann von der ansteigenden Fläche abzurutschen gegen die mit nicht unerheblicher Geschwindigkeit ankommenden Schneidwerkzeuge, so daß dadurch die in Umlaufrichtung weisenden Zähne der Schneidwerkzeuge tiefer in ihn eindringen können. Vorteilhaft kann es dabei sein, wenn der Versatz der Schneidwerkzeuge in etwa einem Umfangswinkel von 10 bis 15° entspricht und das dem Materialeinlauf jeweils am nächsten liegende Schneidwerkzeug um diesen Winkel dem nachfolgenden Schneidwerkzeug voraneilt. Da sich nämlich während ein Müllsack herunterfällt auch die Schneidwerkzeuge weiterdrehen, wird so die Zeit zwischen dem Auftreffen des Sackes auf den Trommelgrund und dem Wirksamwerden des nächsten Schneidwerkzeugs verlängert, also optimal eingestellt, damit sich Sack und Schneidwerkzeug - wie zuvor beschrieben - aufeinander zu bewegen. Das genaue Winkelmaß hängt von dem gewählten Trommeldurchmesser und von der diesem angepaßten optimalen Umfangsgeschwindigkeit ab. So kann es u. U. auch erforderlich werden, den Versatz der Schneidwerkzeuge etwas anders zu wählen, was aber leicht durch Versuche festgestellt werden kann.

Es hat sich in überraschender Weise gezeigt, daß in einer runden, nur mit wenigen Schneidwerkzeugen ausgerüsteten und sonst glatten Trommel die aus den Müll-

...

0148375

säcken herausgelösten Müllbestandteile einer Sortierung nach dem spezifischen Gewicht unterliegen. Am Austrittsende der Trommel sind deutlich sichtbare Unterschiede zweier Materialströme zu erkennen, wobei besonders viele Glasteile in dem Teilstrom größerer Wichte festgestellt werden. Da es wünschenswert ist, diese Glasteile frühzeitig aus dem Materialstrom herauszusortieren, damit sie nicht unnötig weit zerkleinert werden, wird in weiterer Ausgestaltung der Erfindung vorgeschlagen, daß zwischen der ggf. im Durchmesser kleiner ausgebildeten Trommel und der ggf. etwas größeren Siebtrommel getrennte Auslässe für verhältnismäßig leichte Müllbestandteile und verhältnismäßig schwere Müllbestandteile vorgesehen sind und Fördervorrichtungen für die leichten Müllbestandteile, um diese in die nachfolgende Siebtrommel zu überführen. Von dem abgesonderten, verhältnismäßig schwere Müllbestandteile enthaltenden Materialstrom lassen sich die Glasteile leicht auf bekannte Weise abtrennen. Eine besonders vorteilhafte Vorrichtungsanordnung ergibt sich dann, wenn das Austrittsende der Trommel in ein mit Hubschaufeln versehenes Ringbecherwerk ragt, das mit der Siebtrommel in fester Verbindung steht, und unter dem Auswurf im Bereich des Scheitelpunktes eine Rutsche zur Überführung der leichten Müllbestandteile in die Siebtrommel vorgesehen ist. Vorteilhaft ist es dabei, wenn die Längsachse der Trommel gegenüber der Längsachse der Siebtrommel etwas höher vorgesehen ist, weil dadurch mehr Raum für eine günstige Ausgestaltung der Fördervorrichtung für die schweren Müllbestandteile gegeben ist.

...

In der Zeichnung ist eine Vorrichtung gemäß der Erfindung schematisch dargestellt, und zwar zeigt

Fig. 1  eine Längsansicht der Vorrichtung
        mit einem Teilschnitt,

Fig. 2  einen Querschnitt entsprechend
        der Schnittlinie A-A nach Fig. 1,

Fig. 3  einen Abschnitt aus Fig. 2
        in größerem Maßstab,

Fig. 4  einen Querschnitt entsprechend
        der Schnittlinie B-B nach Fig. 1.

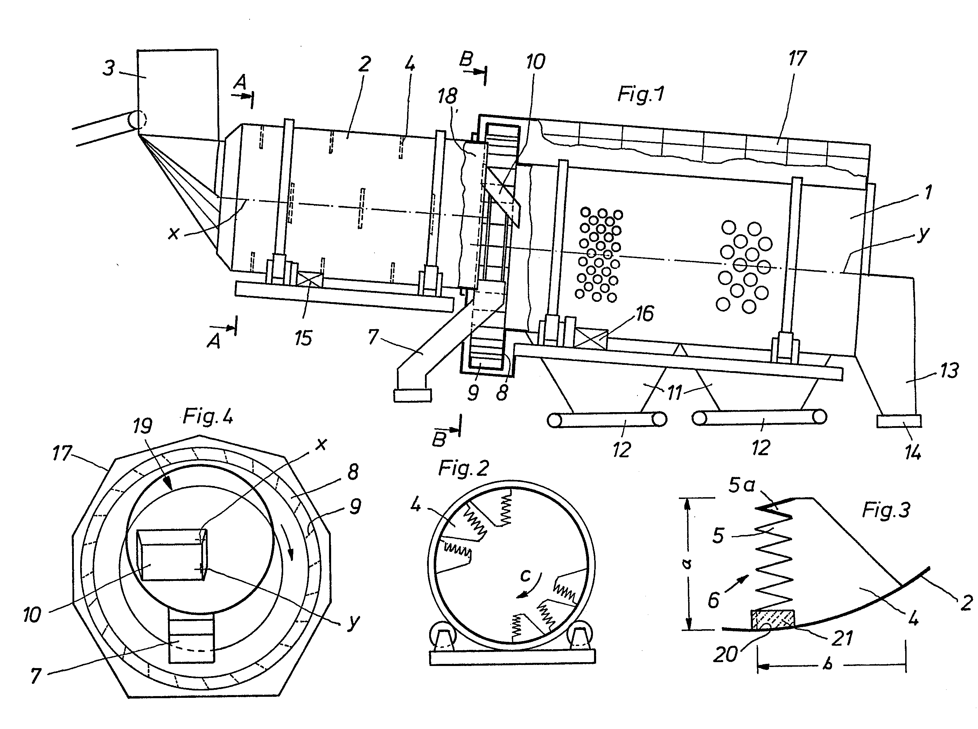

Die Vorrichtung besteht, wie Fig. 1 erkennen läßt, aus einer Siebtrommel 1 und einer dieser vorgeschalteten Aufreißtrommel 2. Die Müll enthaltenden Säcke werden der Aufreißtrommel 2 über eine Schurre 3 aufgegeben. Der geschlossene Mantel der Aufreißtrommel weist auf seiner Innenfläche über diese verteilt nach innen stehende blechförmige Stech- oder Schneidwerkzeuge 4 auf. Entsprechend Fig. 2 weisen die Schneidwerkzeuge eine mit spitzen Zähnen 5 versehene Schneidkante 6 auf, wobei die Schneidkante etwa radial ausgerichtet ist und die Zähne 5 mit ihren Spitzen in Umlaufrichtung Pfeil c weisen. Gemäß dem Ausführungsbeispiel sind jeweils zwei Schneidwerkzeuge gegenüberliegend angeordnet und jedes Schneidwerkzeug einer Reihe ist in Bezug auf die übrigen Schneidwerkzeuge derselben Reihe etwas versetzt angeordnet. Vorzugsweise sind die Schneidwerkzeuge 4 parallel zu einer Querebene der Trommel 2 angeordnet, doch ist auch eine Schrägstellung dazu möglich.

kante
Die gezahnte Schneid/ 6 hat etwa eine Höhe a (in Radialrichtung), die dem Durchmesser eines gefüllten Müll-

...

sacks entspricht, also etwa 600 mm, wobei die Länge b (Fig. 3) in Umfangsrichtung in etwa auch gleich dem Maß a ist. Die Zähne 5 sind verhältnismäßig lang und aus dem Blech der Schneidwerkzeuge 4 herausgearbeitet, wobei allerdings der Zahn 5a, der am weitesten nach innen ragt, verstärkt und im Querschnitt rund ausgebildet, also kegelförmig ist und einen Aufreißdorn bildet.

Die aufgerissenen und entleerten Säcke und der Müll formen sich am Austrittsende der Trommel 2 zu zwei Materialströmen, wobei verhältnismäßig schwere Müllbestandteile aus dem unteren Bereich des Trommelendes 18 austreten und über eine Schurre 7 (Fig. 1 und 4) abgeführt werden. Die verhältnismäßig leichten Müllbestandteile fallen etwas später in Umlaufrichtung hinter der Schurre 7 in ein Ringbecherwerk 8 mit Hubschaufeln 9, das an die Siebtrommel 1 angeflanscht ist. Vom Ringbecherwerk nach oben mitgenommen fallen diese leichten Teile dann über eine Schurre 10 in die Siebtrommel 1.

Die Längsachse x der Trommel 2 und die Längsachse y der Siebtrommel 1 sind in der Höhe zueinander versetzt angeordnet, um den Übergang der ersten Trommel in die Siebtrommel günstiger zu gestalten und um Platz für die Fördervorrichtungen 7 bis 10 zu schaffen. Die Siebtrommel weist zwei Lochungen auf, die Siebdurchgänge fallen durch Trichter 11 auf Förderbänder 12. Der Siebüberlauf gelangt über eine trichterförmige Haube 13 auf ein Förderband 14. Die Trommel 2 und die Siebtrommel 1 werden durch gesonderte Antriebe 15 bzw. 16 in Drehung versetzt, die Siebtrommel 1 und das Ringbecherwerk 8 sind mit einem Gehäuse 17 gegen Staubaustritt eingekleidet.

Wie Fig. 3 außerdem noch zeigt, ist das der Wandung der Trommel 2 zugewandte äußere Ende 20 der Schneid-

...

0148375

kante 6 mit einer Wulst 21 aus elastischem Material gepuffert, um eine übermäßige Zerkleinerung von Glasflaschen und dgl. zu vermeiden.

...

Vorrichtung zum Aufreißen von Müll enthaltenden
Säcken und zum nachfolgenden Sieben des Mülls

Patentansprüche

1.  Vorrichtung zum Aufreißen von Müll enthaltenden
Säcken und zum nachfolgenden Sieben des Mülls, die
eine umlaufende, in Durchlaufrichtung geneigte
Siebtrommel und ins Innere der Trommel ragende
Stech- oder Schneidwerkzeuge od. dgl. aufweist,
dadurch gekennzeichnet, daß die Stech- oder Schneidwerkzeuge ( 4 ) in einer der Siebtrommel ( 1 ) vorgeschalteten, unabhängig von dieser antreibbaren
Trommel ( 2 ) vorgesehen sind.

2.  Vorrichtung nach Anspruch 1, dadurch gekennzeichnet,
daß die vorgeschaltete Trommel ( 2 ) einen geschlossenen, also nicht gelochten, vorzugsweise runden Mantel aufweist.

3.  Vorrichtung nach Anspruch 1 oder 2, dadurch gekennzeichnet, daß die vorgeschaltete Trommel ( 2 ) in
ihrer Neigung zur Waagerechten veränderbar ist.

4.  Vorrichtung nach Anspruch 1, dadurch gekennzeichnet,
daß die vorgeschaltete Trommel ( 2 ) in Bezug auf
die Siebtrommel ( 1 ) mit einer höheren Drehzahl antreibbar ist.

...

0148375

5. Vorrichtung nach Anspruch 1, dadurch gekennzeichnet, daß die Schneidwerkzeuge ( 4 ) eine gezahnte Schneidkante ( 6 ) aufweisen, diese in etwa radial ausgerichtet ist und die Zähne ( 5 ) mit ihren Spitzen in Umlaufrichtung weisen.

6. Vorrichtung nach Anspruch 5, dadurch gekennzeichnet, daß die Schneidwerkzeuge ( 4 ) ein Flächenprofil haben, dessen Länge (b) in Umfangsrichtung der Trommel ( 2 ) etwa der Höhe (a) der Schneidkante ( 6 ) in Radialrichtung entspricht.

7. Vorrichtung nach Anspruch 6, dadurch gekennzeichnet, daß die Höhe (b) der Schneidwerkzeuge ( 4 ) etwa dem Durchmesser zu verarbeitender Müllsäcke entspricht.

8. Vorrichtung nach Anspruch 5, dadurch gekennzeichnet, daß das der Wandung der Trommel ( 2 ) zugewandte äußere Ende (20) der Schneidkante ( 6 ) mit einer Wulst (21) aus elastischem Material gepuffert ist.

9. Vorrichtung nach Anspruch 5, dadurch gekennzeichnet, daß in Umfangsrichtung der Trommel ( 2 ) nur wenige Stech- oder Schneidwerkzeuge ( 4 ), z. B. zwei auf $360^{\circ}$, vorgesehen sind und in axialer Richtung der Abstand eines Schneidwerkzeugs ( 4 ) zum anderen etwas kleiner als der Durchmesser eines gefüllten Müllsacks ist und die Schneidwerkzeuge ( 4 ) zueinander versetzt (in Schraubenlinie) angeordnet sind.

10. Vorrichtung nach Anspruch 9, dadurch gekennzeichnet, daß der Versatz der Schneidwerkzeuge ( 4 ) in etwa einem Umfangswinkel von 10 bis $15^{\circ}$ entspricht und daß das dem Materialeinlauf jeweils am nächsten liegende Schneidwerkzeug ( 4 ) um diesen Winkel dem nachfolgenden Schneidwerkzeug voraneilt.

...

11. Vorrichtung nach Anspruch 1 oder 2, dadurch gekennzeichnet, daß zwischen der ggf. im Durchmesser kleiner ausgebildeten Trommel ( 2 ) und der ggf. etwas größeren Siebtrommel ( 1 ) getrennte Auslässe (10, 7 ) für verhältnismäßig leichte Müllbestandteile und verhältnismäßig schwere Müllbestandteile vorgesehen sind und Fördervorrichtungen ( 8, 9 ) für die leichten Müllbestandteile, um diese in die nachfolgende Siebtrommel ( 1 ) zu überführen.

12. Vorrichtung nach Anspruch 11, dadurch gekennzeichnet, daß das Austrittsende (18) der Trommel ( 2 ) in ein mit Hubschaufeln ( 9 ) versehenes Ringbecherwerk ( 8 ) ragt, das mit der Siebtrommel ( 1 ) in fester Verbindung steht, und unter dem Auswurf (19) im Bereich des Scheitelpunktes eine Rutsche (10) zur Überführung der leichten Müllbestandteile in die Siebtrommel ( 1 ) vorgesehen ist.

13. Vorrichtung nach Anspruch 12, dadurch gekennzeichnet, daß die Längsachse x der Trommel (2) gegenüber der Längsachse y der Siebtrommel (1) etwas höher vorgesehen ist.

*Fig.1*

*Fig.4*

*Fig.2*

*Fig.3*

0148375